# EUROPÄISCHE PATENTSCHRIFT

(11) **EP 3 329 462 B1**
(45) Veröffentlichungstag und Bekanntmachung des Hinweises auf die Patenterteilung: **26.06.2019**
(21) Anmeldenummer: 16741958.9
(22) Anmeldetag: 26.07.2016
(51) Int. Cl.: G06T 7/20

(54) **VERFAHREN ZUM IDENTIFIZIEREN EINES OBJEKTS IN EINEM UMGEBUNGSBEREICH EINES KRAFTFAHRZEUGS, FAHRERASSISTENZSYSTEM SOWIE KRAFTFAHRZEUG**
METHOD FOR IDENTIFYING AN OBJECT IN A SURROUNDING REGION OF A MOTOR VEHICLE, DRIVER ASSISTANCE SYSTEM AND MOTOR VEHICLE
PROCÉDÉ D'IDENTIFICATION D'UN OBJET DANS UNE ZONE ENVIRONNANTE D'UN VÉHICULE AUTOMOBILE, SYSTÈME D'AIDE À LA CONDUITE AINSI QUE VÉHICULE AUTOMOBILE

(30) Priorität: 28.07.2015 DE 102015112289
(43) Veröffentlichungstag der Anmeldung: 06.06.2018
(73) Patentinhaber: Valeo Schalter und Sensoren GmbH, 74321 Bietigheim-Bissingen (DE)
(72) Erfinder: SERGEEV, Nikolai, 74321 Bietigheim-Bissingen (DE)
(86) Internationale Anmeldenummer: PCT/EP2016/067715
(87) Internationale Veröffentlichungsnummer: WO 2017/017077

(56) Entgegenhaltungen:
- EP-A1- 2 549 457
- EP-A2- 2 127 945
- DE-A1-102007 054 048

## Beschreibung

Die Erfindung betrifft ein Verfahren zum Identifizieren eines Objekts in einem Umgebungsbereich eines Kraftfahrzeugs als ein stationäres Objekt, wobei bei dem Verfahren mittels einer fahrzeugseitigen Erfassungseinrichtung der Umgebungsbereich in Bildern erfasst wird und mittels einer Bildverarbeitungseinrichtung in zumindest einem der erfassten Bilder das Objekt erkannt wird. Die Erfindung betrifft außerdem ein Fahrerassistenzsystem sowie ein Kraftfahrzeug.

Es ist bereits aus dem Stand der Technik bekannt, Erfassungseinrichtungen, beispielsweise Kameras, an Kraftfahrzeugen anzubringen, um somit einen Umgebungsbereich des Kraftfahrzeugs in Bildern zu erfassen. Aus diesen Bildern können Informationen extrahiert werden, indem beispielsweise mittels einer Bildverarbeitungseinrichtung Objekte in den Bildern erkannt werden. So schlägt die DE 10 2008 063 328 A1 beispielsweise vor, anhand von erfassten Objekten eine Änderung eines Nickwinkels eines Kraftfahrzeugs zu bestimmen.

Diese Informationen können einem Fahrerassistenzsystem des Kraftfahrzeugs, beispielsweise einer automatischen Fernlichtregulierung, bereitgestellt werden. Die aus den Bildern extrahierten Informationen können beispielsweise dazu verwendet werden, das von dem Kraftfahrzeug ausgesendete Fernlicht dahingehen zu regulieren, dass einerseits der Umgebungsbereich des Kraftfahrzeugs, insbesondere eine Fahrbahn des Kraftfahrzeugs, bestmöglich ausgeleuchtet wird, aber andererseits andere Verkehrsteilnehmer, beispielweise entgegenkommende Fahrzeuge, nicht geblendet werden. Dazu müssen die erfassten Objekte in dem Umgebungsbereich des Kraftfahrzeugs zunächst klassiert beziehungsweise identifiziert werden, um beispielsweise entgegenkommende Fahrzeuge überhaupt als solche zu erkennen.

In der EP 2 549 457 A1 wird eine fahrzeugmontierte Umgebungserkennungsvorrichtung mit einer Musteranpassungseinheit offenbart, die einen Objektkandidaten aus einem von einer fahrzeugmontierten Bildaufnahmevorrichtung erhaltenen Bild unter Verwendung einer vorab gespeicherten Musterform extrahiert und eine Position des Objektkandidaten ausgibt. Mittels einer Flächenänderungsvorhersageeinheit der Umgebungserkennungsvorrichtung wird eine Änderungsvorhersage des extrahierten Objektkandidaten berechnet auf Grundlage einer Objektänderungsvorhersageberechnung, die für jeden der Vielzahl an Teilbereichen des Bildes unterschiedlich eingestellt wird, einer Fahrzeugverhaltensinformation und einer eingegeben Position des Objektkandidats. Die Umgebungserkennungsvorrichtung weist zudem eine Verfolgungseinheit auf, die das Objekt auf der Grundlage einer eingegebenen vorhergesagten Position des Objekts verfolgt.

Es ist Aufgabe der vorliegenden Erfindung, Objekte in einem Umgebungsbereich eines Kraftfahrzeugs zuverlässig und einfach identifizieren zu können.

Diese Aufgabe wird erfindungsgemäß durch ein Verfahren und ein Fahrerassistenzsystem mit den Merkmalen gemäß den unabhängigen Patentansprüchen gelöst.

Ein erfindungsgemäßes Verfahren dient zum Identifizieren eines Objekts in einem Umgebungsbereich eines Kraftfahrzeugs als ein stationäres Objekt. Bei dem Verfahren wird mittels einer fahrzeugseitigen Erfassungseinrichtung der Umgebungsbereich in Bildern erfasst und mittels einer Bildverarbeitungseinrichtung in zumindest einem der erfassten Bilder das Objekt erkannt. Darüber hinaus wird anhand zumindest eines ersten erfassten Bilds eine erste Position des Objekts in dem Umgebungsbereich relativ zum Kraftfahrzeug abgeschätzt, anhand des ersten Bilds und zumindest eines zweiten erfassten Bilds ein Bewegungsverlauf des Objekts in Bildkoordinaten bestimmt, ausgehend von der ersten abgeschätzten Position in dem Umgebungsbereich ein erster, ein stationäres Objekt charakterisierender Bewegungsverlauf in den Bildkoordinaten bestimmt und anhand eines Vergleichs des Bewegungsverlaufs des erfassten Objekts mit dem ersten charakterisierenden Bewegungsverlauf das erfasste Objekt als ein stationäres Objekt identifiziert.

Das Verfahren dient also dazu, zu unterscheiden, ob es sich bei Objekten in dem Umgebungsbereich um stationäre Objekte oder um nichtstationäre Objekte handelt. Wird ein Objekt nämlich mittels des Verfahrens als nichtstationär identifiziert, so wird davon ausgegangen, dass es sich bei dem Objekt um ein dynamisches Objekt handelt. Bei dem Verfahren wird der Umgebungsbereich, insbesondere der in Fahrtrichtung vor, insbesondere seitlich vor, dem Kraftfahrzeug liegende Umgebungsbereich, mit der fahrzeugseitigen Erfassungseinrichtung, welche beispielsweise zumindest eine Kamera umfasst, in Bildern erfasst. Die Kamera ist dabei insbesondere dazu ausgelegt, den Umgebungsbereich zweidimensional zu erfassen. Die Bildverarbeitungseinrichtung ist nun dazu ausgelegt, aus Bilddaten des zumindest einen erfassten Bilds eine zweidimensionale Projektion des Objektes in dem zumindest einen erfassten Bild zu erkennen und somit das Objekt in dem Umgebungsbereich zu erkennen.

Erfindungsgemäß ist es nun vorgesehen, dass anhand des ersten erfassten Bilds eine erste Position des Objekts, also des realen Objektes, in dem Umgebungsbereich relativ zum Kraftfahrzeug abgeschätzt wird. Das erste Bild kann dabei das Bild sein, in welchem das Objekt von der Bildverarbeitungseinrichtung erkannt wurde. Anhand der zweidimensionalen Projektion des Objektes auf dem ersten Bild, beispielsweise anhand von zweidimensionalen geometrischen Abmessungen des Objektes auf dem Bild, kann die erste Position des realen Objektes in dem Umgebungsbereich abgeschätzt werden. Die erste Position wird dabei insbesondere in einem Weltkoordinatensystem bestimmt und beschreibt einen ersten, möglichen Abstand des erfassten Objekts zu dem Kraftfahrzeug. Das Weltkoordinatensystem kann beispielsweise ein Fahrzeugkoordinatensystem aufweisend eine erste Achse entlang einer Fahrzeugquerrichtung, eine zweite Achse entlang einer Fahrzeuglängsrichtung und eine dritte Achse entlang einer Fahrzeughochrichtung sein. Der Abstand des Objektes zu dem Kraftfahrzeug wird also insbesondere nur anhand der erfassten Bilder bestimmt. Insbesondere wird der Abstand nicht direkt gemessen. Somit kann die Kamera besonders einfach gestaltet sein und muss beispielsweise nicht als eine teure Time-of-Flight-Kamera ausgestaltet sein.

Anhand von dem ersten Bild und zumindest einem zweiten Bild wird ein Bewegungsverlauf des Objekts, also der Projektion des Objektes, in den Bildkoordinaten bestimmt. Die Bildkoordinaten werden dabei in einem zweidimensionalen Bildkoordinatensystem aufweisend eine erste, beispielsweise horizontale, Bildachse und eine zweite, beispielsweise vertikale, Bildachse bestimmt. Der Bewegungsverlauf in den Bildkoordinaten wird dabei so bestimmt, dass in dem ersten Bild eine Bildposition des Objekts, beispielsweise die Bildposition eines Projektionspunktes des Objektes, in den Bildkoordinaten bestimmt wird und in dem zumindest einen zweiten Bild eine Bildposition des Objektes, beispielsweise die Bildposition des Projektionspunktes des Objektes in dem zweiten Bild, in den Bildkoordinaten bestimmt wird. Die Änderung der Bildpositionen des Objektes zwischen den zwei Bilden ergibt dabei den Bewegungsverlauf des Objektes. Die Bildpositionsänderung des Objektes, also die Bewegung der Projektion des Objektes in den aufgenommenen Bildern, ergibt sich durch ein Fortbewegen des Kraftfahrzeugs auf einer Fahrbahn. Durch diese Fortbewegung des Kraftfahrzeugs ändern sich die Bildpositionen des Objektes in dem Bild und damit die Bildkoordinaten des Objektes zwischen den zumindest zwei Bildern. Der Bewegungsverlauf des erfassten Objekts in den Bildkoordinaten entspricht dabei einem Ist-Bewegungsverlauf beziehungsweise einem tatsächlichen Bewegungsverlauf der Projektion des Objekts in Bildkoordinaten. Die Zeit zwischen zwei nacheinander aufgenommenen Bildern kann beispielsweise zwischen 50 ms und 80 ms, insbesondere 60 ms, betragen. Somit kann beispielsweise alle 60 ms eine Bildposition des Objektes bestimmt werden.

Zusätzlich wird nun der erste, ein stationäres Objekt charakterisierende Bewegungsverlauf in den Bildkoordinaten bestimmt. Der erste charakterisierende Bewegungsverlauf entspricht dabei einem ersten Soll-Bewegungsverlauf, welchen die Projektion des Objektes aufweist, falls es sich beim dem Objekt um ein stationäres Objekt an der ersten abgeschätzten Position handelt. Zum Bestimmen des ersten charakterisierenden Bewegungsverlaufes können beispielsweise Bildpositionen eines vorgegebenen stationären Referenzobjektes an der ersten abgeschätzten Position für die zumindest zwei Bilder bestimmt werden. Der Bewegungsverlauf des erfassten Objektes und der erste charakterisierende Bewegungsverlauf können als jeweils eine Trajektorie bestimmt werden und beispielsweise in einem der erfassten Bilder dargestellt werden.

Zum Identifizieren des Objektes als ein stationäres Objekt können nun der Ist-Bewegungsverlauf und der erste Soll-Bewegungsverlauf verglichen werden. Dazu kann beispielsweise ein Abstand zwischen den Trajektorien in dem Bild bestimmt werden. Wenn beispielsweise der Ist-Bewegungsverlauf deckungsgleich mit dem ersten Soll-Bewegungsverlauf ist oder der Ist-Bewegungsverlauf höchstens um einen vorgegebenen Schwellwert von dem ersten Soll-Bewegungsverlauf abweicht, kann das erfasste Objekt als ein stationäres Objekt identifiziert werden. Wenn jedoch der Ist-Bewegungsverlauf um mehr als den vorgegebenen Schwellwert von dem ersten Soll-Bewegungsverlauf abweicht, wird das erfasste Objekt als ein dynamisches Objekt identifiziert.

Mittels des erfindungsgemäßen Verfahrens kann also auf besonders einfache Weise aus erfassten Bildern des Umgebungsbereiches das Objekt in dem Umgebungsbereich klassiert beziehungsweise identifiziert werden.

Erfindungsgemäß wird anhand des zumindest einen ersten erfassten Bilds zusätzlich eine zweite Position des Objekts in dem Umgebungsbereich relativ zum Kraftfahrzeug abgeschätzt, ausgehend von der zweiten abgeschätzten Position in dem Umgebungsbereich ein zweiter, ein stationäres Objekt charakterisierender Bewegungsverlauf in den Bildkoordinaten bestimmt und das erfasste Objekt anhand des Vergleichs des Bewegungsverlaufs des erfassten Objekts mit dem zweiten charakterisierenden Bewegungsverlauf identifiziert. Mit anderen Worten bedeutet dies, dass zusätzlich zu dem ersten, möglichen Abstand des Objekts zu dem Kraftfahrzeug ein zweiter, möglicher Abstand des Objekts zu dem Kraftfahrzeug abgeschätzt wird. Auch der zweite Abstand wird in dem Weltkoordinatensystem bestimmt.

Der Erfindung liegt hierbei die Erkenntnis zugrunde, dass anhand des durch die Erfassungseinrichtung zweidimensional erfassten Bilds der Abstand des Objekts nicht genau bestimmt werden kann, sondern insbesondere entlang einer Kameraachse variieren kann. Daher werden zwei mögliche, plausible Abstände des Objektes zu dem Kraftfahrzeug abgeschätzt. Daraufhin wird zusätzlich zu dem ersten charakterisierende Bewegungsverlauf in Bildkoordinaten, welcher für das Referenzobjekt an der ersten Position in Weltkoordinaten bestimmt, der zweite charakterisierende Bewegungsverlauf in Bildkoordinaten für das Referenzobjekt an der zweiten Position in Weltkoordinaten bestimmt. Der zweite charakterisierende Bewegungsverlauf entspricht dabei einem zweiten Soll-Bewegungsverlauf, welchen das Objekt aufweist, falls es sich um ein stationäres Objekt an der zweiten abgeschätzten Position handelt. Der zweite charakterisierende Bewegungsverlauf wird ebenfalls als eine Trajektorie bestimmt werden und in dem erfassten Bild dargestellt. Zusätzlich wird der Ist-Bewegungsverlauf mit dem zweiten Soll-Bewegungsverlauf verglichen. Das erfasste Objekt wird dann als stationär identifiziert, wenn der Ist-Bewegungsverlauf deckungsgleich mit dem zweiten Soll-Bewegungsverlauf ist oder höchstens um einen weiteren vorgegebenen Schwellwert von dem zweiten Soll-Bewegungsverlauf abweicht. Durch das Bestimmen des zweiten Soll-Bewegungsverlaufes und das Vergleichen des Ist-Bewegungsverlaufes mit beiden Soll-Bewegungsverläufen wird das erfasste Objekt besonders zuverlässig klassifiziert und als stationäres Objekt identifiziert.

Besonders bevorzugt wird das erfasste Objekt als ein stationäres Objekt identifiziert, wenn der Bewegungsverlauf des erfassten Objekts innerhalb eines durch den ersten und den zweiten charakterisierenden Bewegungsverlauf gebildeten Korridors liegt. Anders ausgedrückt bedeutet dies, dass der erste und der zweite Bewegungsverlauf in den Bildkoordinaten den Korridor, also einen Bewegungsbereich, ausbilden, innerhalb dessen sich das erfasste Objekt bewegt, falls es sich um stationäres Objekt handelt. Es kann dabei auch vorgesehen sein, dass der Korridor um einen Toleranzbereich erweitert wird, sodass das erfasste Objekt auch dann als stationäres Objekt identifiziert wird, wenn sich der Bewegungsverlauf des erfassten Objekts außerhalb des Korridors, aber innerhalb des Toleranzbereichs befindet. Durch eine Darstellung aller Bewegungsverläufe als Trajektorien in einem der Bilder kann auf besonders einfache Weise bestimmt werden, ob die Trajektorie des erfassten Objektes innerhalb des Korridors liegt.

Es erweist sich als vorteilhaft, wenn für das erfasste Objekt eine für das stationäre Objekt charakteristische erste Höhe vorgegeben wird und anhand des zumindest einen ersten Bilds und anhand der für das Objekt vorgegebenen ersten Höhe die erste Position in dem Umgebungsbereich relativ zum Kraftfahrzeug bestimmt wird, und für das erfasste Objekt eine für das stationäre Objekt charakteristische zweite Höhe vorgegeben wird und anhand des zumindest einen zweiten Bilds und anhand der für das Objekt vorgegebenen zweiten Höhe die zweite Position in dem Umgebungsbereich relativ zum Kraftfahrzeug bestimmt wird. Um nun die Positionen des Objekts in Weltkoordinaten anhand der zweidimensionalen Bilder plausibel abzuschätzen, werden zwei verschiedene, plausible Höhen für das Objekt vorgegeben. Die erste Höhe entspricht dabei einer maximalen Höhe, welche beispielsweise das vorbestimmte stationäre Referenzobjekt aufweisen kann, und die zweite Höhe einer minimalen Höhe, welche das vorbestimmte stationäre Referenzobjekt aufweisen kann. Die minimale und die maximale Höhe können beispielsweise für die Bildverarbeitungseinrichtung hinterlegt werden, sodass die Positionen des Objektes in Weltkoordinaten anhand des zumindest einen erfassten ersten Bildes mittels der hinterlegten Höhen einfach und schnell bestimmt werden können. Somit können also die Abstände des Objektes zu dem Kraftfahrzeug plausibel und schnell bestimmt werden, insbesondere ohne den Abstand direkt messen zu müssen. Somit kann auf eine separate Sensoreinrichtung zur Abstandsmessung und/oder die Ausgestaltung der Kamera als eine Time-of-Flight-Kamera verzichtet werden.

Es kann vorgesehen sein, dass zum Bestimmen eines charakterisierenden Bewegungsverlaufes eine Fahrzeuggeschwindigkeit und/oder eine Drehrate des Kraftfahrzeugs um eine Fahrzeughochachse erfasst wird. Anhand der Fahrzeuggeschwindigkeit und/oder der Drehrate kann also ausgehend von der ersten abgeschätzten Position und der zweiten abgeschätzten Position für jeden Zeitpunkt, an welchem ein Bild erfasst wird, die Position des Objektes im Falle eines stationären Objektes in dem Weltkoordinatensystem, also beispielsweise die Position des Referenzobjektes in dem Umgebungsbereich relativ zum Kraftfahrzeug, bestimmt und in die Bildpositionen in den entsprechenden Bildkoordinaten des zu dem Zeitpunkt erfassten Bildes umgerechnet werden. Somit kann für jedes Bild die Bildposition des Referenzobjektes und damit eine Soll-Bildposition bestimmt werden, welche das erfasste Objekt in dem Bild aufweist, falls das erfasste Objekt stationär ist. Die Veränderung der Soll-Bildpositionen zwischen zwei Bildern ergibt den Soll-Bewegungsverlauf, also den ein stationäres Objekt charakterisierenden Bewegungsverlauf.

Außerdem werden die charakterisierenden Bewegungsverläufe unter der Annahme bestimmt, dass sich das Kraftfahrzeug auf einer ebenen Fahrbahn fortbewegt. Unter einer ebenen Fahrbahn ist hier eine Fahrbahn zu verstehen, welche keine Bodenwellen oder Schlaglöcher aufweist. Dies bedeutet, dass angenommen wird, dass das Kraftfahrzeug beim Fortbewegen keine Nickbewegung, also keine Drehbewegung um die Fahrzeugquerachse, durchführt. Mit anderen Worten ändert sich ein Nickwinkel des Kraftfahrzeugs beim Fortbewegen nicht. Somit können die charakterisierenden Bewegungsverläufe bestimmt werden, ohne dass der Nickwinkel des Kraftfahrzeugs aufwändig erfasst werden muss.

Gemäß einer Ausführungsform werden beim Vergleich des Bewegungsverlaufs des erfassten Objekts mit dem charakterisierenden Bewegungsverlauf nur Bildkoordinaten einer vorbestimmten Richtung verglichen. Vorzugsweise werden nur Bildkoordinaten in horizontaler Richtung miteinander verglichen. Der Erfindung liegt hierbei die Erkenntnis zugrunde, dass sich, auch wenn es sich bei dem erfassten Objekt um ein stationäres Objekt handelt, die vertikalen Bildkoordinaten des erfassten Objekts deutlich von den vertikalen Bildkoordinaten der charakterisierenden Bewegungsverläufe unterscheiden würden, wenn sich das Kraftfahrzeug auf einer unebenen, Bodenwellen aufweisenden Fahrbahn fortbewegt. Aufgrund der unebenen Fahrbahn führt das Kraftfahrzeug beim Fortbewegen eine Nickbewegung durch, wodurch sich das erfasste Objekt in dem Bild scheinbar in vertikaler Richtung bewegt. Diese scheinbare vertikale Bewegung des erfassten Objektes in den Bildkoordinaten kann dazu führen, dass sich der anhand der Bildpositionen der Projektion des Objektes bestimmte Bewegungsverlauf des erfassten Objektes außerhalb des durch die zwei charakterisierenden Bewegungsverläufe gebildeten Korridors befindet. Die charakterisierenden Bewegungsverläufe werden nämlich insbesondere unter der Annahme bestimmt, dass sich das Kraftfahrzeug auf einer ebenen, keine Bodenwellen aufweisenden Fahrbahn bewegt. Dies bedeutet, dass sich die scheinbare Vertikalbewegung des stationären Objektes in den charakterisierenden Bewegungsverläufen nicht widerspiegelt. Daher werden bei der Untersuchung, ob sich der Bewegungsverlauf des erfassten Objekts innerhalb des Korridors befindet, nur die Bildkoordinaten in horizontaler Richtung berücksichtigt. Die Bildkoordinaten in vertikaler Richtung bleiben unberücksichtig. Somit kann auch bei einer Fahrbahn, auf welcher das Kraftfahrzeug beispielsweise aufgrund von Schlaglöchern, eine Nickbewegung durchführt, ein Objekt zuverlässig als stationäres Objekt identifiziert werden, insbesondere ohne den Nickwinkel separat erfassen zu müssen.

In einer Weiterbildung der Erfindung wird die Position des erfassten Objekts anhand von einem zu einem aktuellen Zeitpunkt erfassten ersten Bild abgeschätzt und der Bewegungsverlauf des erfassten Objekts anhand von zumindest einem, zu einem zeitlich vor dem aktuellen Zeitpunkt erfassten zweiten Bild bestimmt. Dies bedeutet, dass die aktuelle Position des Objekts in den Weltkoordinaten abgeschätzt wird und ausgehend von der aktuellen Position die bereits zurückgelegte Bewegung des erfassten Objektes bestimmt wird. Anders ausgedrückt wird der Bewegungsverlauf des erfassten Objekts rückblickend, also anhand der aufgezeichneten Historie von Bildkoordinaten, bestimmt. Damit wird auch rückblickend der charakterisierende Bewegungsverlauf bestimmt, also eine Bewegung, welche das erfasste Objekt durchgeführt hätte, falls es sich um ein stationäres Objekt handeln würde. Somit kann das Objekt besonders schnell als stationäres Objekt oder als dynamisches Objekt klassiert werden.

Vorzugsweise wird das Objekt als ein stationäres, Licht reflektierendes Objekt, insbesondere als ein Leitposten oder als ein Straßenschild, als das vorbestimmte Objekt identifiziert. Unter einem Licht reflektierenden Objekt ist dabei ein Objekt zu verstehen, welches ein aktives, Licht reflektierendes Element aufweist. Ein solches Element kann beispielsweise ein Reflektor sein, welcher das Licht beispielsweise wie ein Katzenauge reflektiert. Solche Objekte können beispielsweise Leitpfosten beziehungsweise Reflexionspfosten sein, welche in der Regel an einem Fahrbahnrand des Kraftfahrzeugs angebracht sind und welche einem Fahrer des Kraftfahrzeugs vor allem bei Dunkelheit beziehungsweise Nacht oder schlechter Sicht eine Orientierung erleichtern. Auch können solche Objekte Straßenschilder sein, welche zur verbesserten Sichtbarkeit aktiv Licht reflektieren. Durch die aktiv Licht reflektierenden Objekte wird Licht, welches beispielsweise von einem Schweinwerfer des Kraftfahrzeugs zum Ausleuchten der Fahrbahn ausgesendet wurde, gerichtet beziehungsweise definiert von dem Objekt zu dem Kraftfahrzeug zurückgeworfen und kann somit von der Bildverarbeitungseinrichtung, vor allem bei Nacht, fälschlicherweise als ein entgegenkommendes, Licht aussendendes Fahrzeug erkannt werden. Mittels des erfindungsgemäßen Verfahrens, welches Objekte als stationär oder dynamisch identifizieren kann, kann eine solche Verwechslung in vorteilhafter Weise verhindert werden.

Dabei kann das Objekt als stationäres, Licht reflektierendes Objekt, insbesondere als ein Leitpfosten und/oder als ein Straßenschild identifiziert werden, wenn anhand des zumindest einen erfassten ersten Bilds und/oder zweiten Bilds erfasst wurde, dass das erfasste Objekt Licht in Richtung des Kraftfahrzeugs gerichtet beziehungsweise definiert aussendet, und anhand des Vergleichs des Bewegungsverlaufes des erfassten, Licht aussendenden Objekts mit einem für ein stationäres Objekt charakterisierenden Bewegungsverlauf erfasst wurde, dass das erfasste Objekt stationär ist. Anders ausgedrückt bedeutet dies, dass anhand beispielsweise des ersten erfassten Bilds erfasst wird, ob das Objekt gerichtet Licht in Richtung des Kraftfahrzeugs aussendet. Anhand dieses Bilds kann auch die Position des Objekts abgeschätzt werden. Anschließend kann der Bewegungsverlauf des erfassten, Licht aussendenden Ojekts bestimmt werden und anhand des Vergleichs mit dem charakterisierenden Bewegungsverlauf das Objekt als stationär identifiziert werden.

Vorzugsweise wird eine Regulierung eines von einem Scheinwerfer des Kraftfahrzeugs zum Ausleuchten einer Fahrbahn des Kraftfahrzeugs ausgesendeten Lichts blockiert, wenn das Objekt als das stationäre, aktiv Licht reflektierende Objekt identifiziert wurde. Mit anderen Worten bedeutet dies, dass keine automatische Fernlichtregulierung, beispielsweise ein Abblenden des Lichtes, erfolgt, falls erfasst wurde, dass das erfasste Objekt kein entgegenkommendes Fahrzeug, sondern beispielsweise ein Leitpfosten oder ein Straßenschild ist. Somit kann verhindert werden, dass die automatische Fernlichtregulierung unnötigerweise erfolgt.

Die Erfindung betrifft außerdem ein Fahrerassistenzsystem, insbesondere zur Fernlichtregulierung, zum Identifizieren eines Objekts in einem Umgebungsbereich eines Kraftfahrzeugs als ein stationäres Objekt. Das Fahrerassistenzsystem umfasst eine fahrzeugseitige Erfassungseinrichtung, beispielsweise eine Kamera, zum Erfassen des Umgebungsbereichs in Bildern und eine Bildverarbeitungseinrichtung zum Erkennen des Objekts in zumindest einem der erfassten Bilder. Darüber hinaus ist die Bildverarbeitungseinrichtung dazu ausgelegt, anhand zumindest eines ersten erfassten Bilds eine erste Position des Objekts in dem Umgebungsbereich relativ zum Kraftfahrzeug abzuschätzen, anhand des ersten Bilds und zumindest eines zweiten erfassten Bilds einen Bewegungsverlauf des Objekts in Bildkoordinaten zu bestimmen, ausgehend von der ersten abgeschätzten Position in dem Umgebungsbereich einen ersten, ein stationäres Objekt charakterisierenden Bewegungsverlauf in den Bildkoordinaten zu bestimmen und anhand eines Vergleichs des Bewegungsverlaufs des erfassten Objekts mit dem ersten charakterisierenden Bewegungsverlauf das erfasste Objekt als ein stationäres Objekt zu identifizieren.

Ein erfindungsgemäßes Kraftfahrzeug umfasst ein erfindungsgemäßes Fahrerassistenzsystem. Das Kraftfahrzeug ist insbesondere als ein Personenkraftwagen ausgestaltet. Das Fahrerassistenzsystem kann dabei beispielsweise Scheinwerfer des Kraftfahrzeugs zur Regulierung des von den Scheinwerfern ausgesendeten Lichts ansteuern.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Mit Angaben "oben", "unten", "vorne", "hinten", "horizontal" (a-Richtung), "vertikal"(b-Richtung) etc. sind bei bestimmungsgemäßer Betrachtung der erfassten Bilder gegebene Positionen und Orientierungen angegeben. Mit Angaben "innen", "außen", "seitlich", "rechts", "links", "oben", "unten", "Fahrzeughochachse" (z-Richtung), "Fahrzeuglängsachse" (y-Richtung), "Fahrzeugquerachse" (x-Richtung), etc. sind bei einem vor dem Kraftfahrzeug stehenden und in Richtung der Fahrzeuglängsachse blickenden Beobachter gegebene Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen sowie nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Im Folgenden wird die Erfindung nun anhand eines bevorzugten Ausführungsbeispiels wie auch unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs;
- Fig. 2a, 2b, 2c: schematische Darstellungen von Bildern, welche von einer fahrzeugseitigen Erfassungseinrichtung aufgenommen wurden; und
- Fig. 3: eine schematische Darstellung einer Ausführungsform zur Positionsbestimmung eines erfassten Objektes.

In den Figuren sind gleiche sowie funktionsgleiche Elemente mit den gleichen Bezugszeichen versehen.

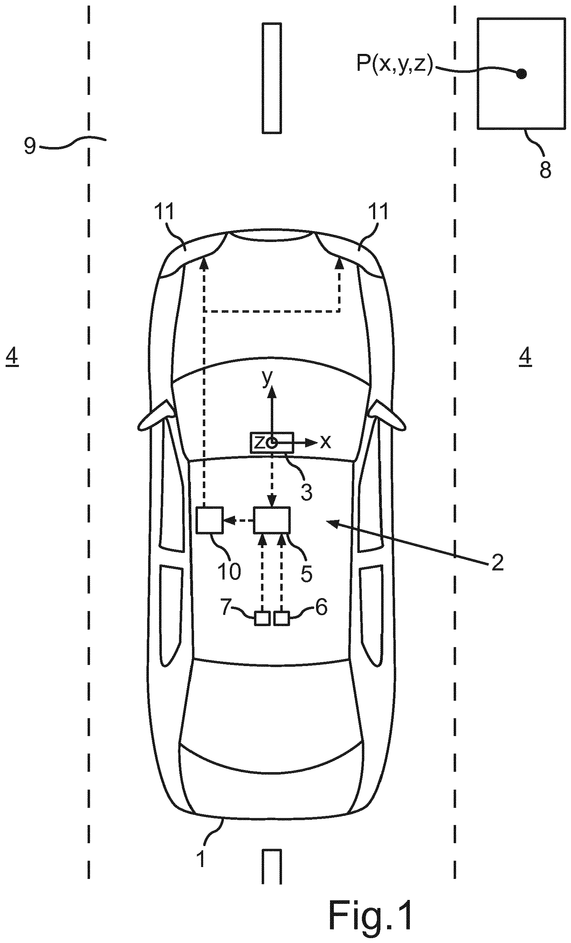

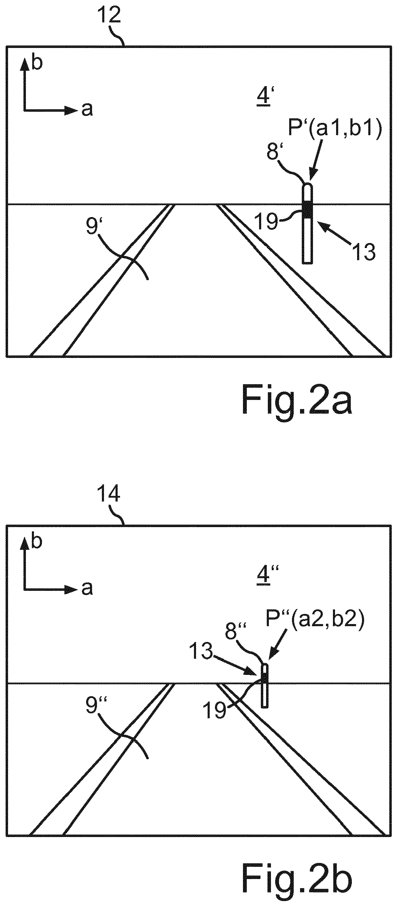

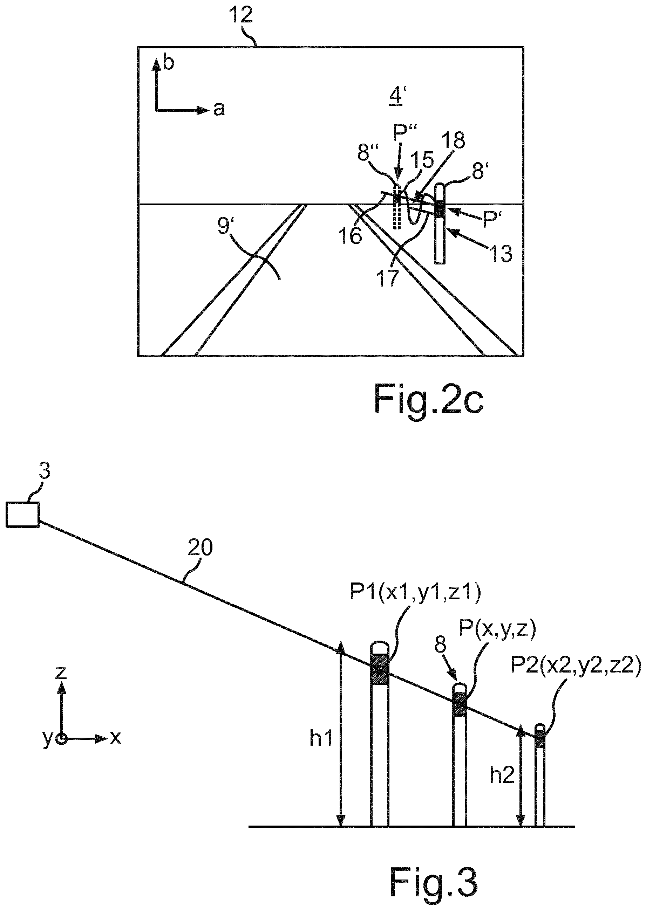

Fig. 1 zeigt ein Kraftfahrzeug 1 mit einem Fahrerassistenzsystem 2. Das Fahrerassistenzsystem 2 umfasst eine fahrzeugseitige Erfassungseinrichtung 3, welche zumindest eine Kamera umfassen kann. Die Erfassungseinrichtung 3 dient dazu, einen Umgebungsbereich 4 des Kraftfahrzeugs 1 in zweidimensionalen Bildern 12, 14 (siehe Fig. 2a, 2b, 2c) zu erfassen. Insbesondere erfasst die Erfassungseinrichtung Bilder 12, 14 von einem sich in Fahrtrichtung (y-Richtung) vor und seitlich vor dem Kraftfahrzeug 1 befindlichen Umgebungsbereich 4, während sich das Kraftfahrzeug 1 auf einer Fahrbahn 9 fortbewegt.

Das Fahrerassistenzsystem 2 umfasst außerdem eine Bildverarbeitungseinrichtung 5, welche dazu ausgelegt ist, die von der Erfassungseinrichtung 3 erfassten Bilder 12, 14 des Umgebungsbereichs 4 zu verarbeiten und beispielsweise Informationen aus des erfassten Bildern 12, 14 zu extrahieren. Basierend auf den aus den Bildern 12, 14 extrahierten Informationen kann das Fahrerassistenzsystem 2, welches insbesondere zur Fernlichtregulierung dient, Scheinwerfer 11 des Kraftfahrzeugs 1 ansteuern, um das von den Scheinwerfern 11 ausgesendete Licht zu regulieren beziehungsweise zu beeinflussen. Außerdem kann das Fahrerassistenzsystem 2 einen Geschwindigkeitssensor 6 zum Erfassen einer Geschwindigkeit des sich auf der Fahrbahn 9 fortbewegenden Kraftfahrzeugs 1 und einen Drehratensensor 7 zum Erfassen einer Drehrate des Kraftfahrzeugs 1 um eine Fahrzeughochachse (z-Richtung) des Kraftfahrzeugs 1 aufweisen.

Die Bildverarbeitungseinrichtung 5 ist dazu ausgelegt, in zumindest einem der von der Erfassungseinrichtung 3 erfassten Bilder 12, 14 ein Objekt 8 zu erkennen. Das Objekt 8 weist in dem Umgebungsbereich 4 eine Position P(x, y, z) relativ zum Kraftfahrzeug 1 auf. Die Position P ist dabei eine Position in einem Weltkoordinatensystem x, y, z, welches hier als ein Fahrzeugkoordinatensystem definiert ist. Dabei verläuft die x-Achse des Weltkoordinatensystems entlang einer Fahrzeugquerrichtung, die y-Achse entlang einer Fahrzeuglängsrichtung und die z-Achse entlang einer Fahrzeughochrichtung.

Die Bildverarbeitungseinrichtung 5 ist nun dazu ausgelegt, das Objekt 8 zu klassieren, also zu identifizieren, ob es sich bei dem Objekt 8 um ein stationäres, in dem Umgebungsbereich 4 ortsfestes Objekt oder um ein dynamisches Objekt handelt. Wenn es sich bei dem erfassten Objekt 8 um ein dynamisches Objekt, beispielsweise in Form von einem entgegenkommenden Fahrzeug, handelt, kann eine Steuereinrichtung 10 des Fahrerassistenzsystems 2 beispielsweise die Scheinwerfer 11 des Kraftfahrzeugs 1 ansteuern, um das von den Scheinwerfern 11 ausgesendeten Lichts abzublenden und somit ein Blenden eines Fahrers des entgegenkommenden Fahrzeugs zu verhindern. Diese Regulierung des von den Scheinwerfern 11 ausgesendeten Lichts soll jedoch blockiert werden, wenn von der Bildverarbeitungseinrichtung 5 erfasst wurde, dass es sich bei dem Objekt 8 um ein stationäres Objekt, beispielsweise in Form von einem Leitpfosten 13 oder einem Straßenschild, handelt.

Die Identifizierung des Objekts 8 als ein stationäres Objekt, insbesondere als ein Leitpfosten 13, wird anhand von Fig. 2a, Fig. 2b und Fig. 2c erläutert. Fig. 2a zeigt ein von der Erfassungseinrichtung 3 zu einem ersten Zeitpunkt aufgenommenes Bild 12 des Umgebungsbereichs 4. Das erste Bild 12 zeigt den Umgebungsbereich 4' als eine zweidimensionale Projektion des Umgebungsbereiches 4, die Fahrbahn 9' als eine zweidimensionale Projektion der Fahrbahn 9 und das Objekt 8' als ein zweidimensionale Projektion des Objekts 8 zu dem ersten, insbesondere aktuellen, Zeitpunkt. Eine Bildposition P' des Objekts 8' wird mittels Bildkoordinaten a, b eines zweidimensionalen Bildkoordinatensystems angegeben. Das Objekt 8' weist in dem Bild 12 eine erste Bildposition P'(a1, b1) auf. Anhand des zweidimensionalen ersten Bildes 12 werden eine erste Position P1(x1, y1, z1) des realen Objektes 8 (siehe Fig. 3) relativ zum Kraftfahrzeug 1, also ein erster, möglicher Abstand des Objektes 8 zu dem Kraftfahrzeug 1, und eine zweite Position P2(x2, y2, z2) des realen Objektes 8 relativ zum Kraftfahrzeug 1, also ein zweiter, möglicher Abstand des Objektes 8 zu dem Kraftfahrzeug 1, abgeschätzt. Die Positionen P1, P2 werden dabei in dem Weltkoordinatensystem (x, y, z) bestimmt.

Zum Bestimmen der ersten Position P1 wird, wie in Fig. 3 gezeigt, eine erste, maximale Höhe h1 für das Objekt 8 vorgegeben beziehungsweise angenommen. Zum Bestimmen der zweiten Position P2 wird eine zweite, minimale Höhe h2 für das Objekt 8 angenommen. Die möglichen Positionen P1, P2 des realen Objektes 8 können dann anhand des Bildes 12 und der Höhen h1, h2 bestimmt werden. Die tatsächliche Position P(x, y, z) des Objektes 8 befindet sich hier entlang einer Kameraachse 20 zwischen den zwei Positionen P1, P2. Die Höhen h1, h2 können beispielsweise eine typische, vorgegebene Maximalhöhe und eine typische, vorgegebene Minimalhöhe eines Leitpfostens 13 sein.

Zum Identifizieren des erfassten Objektes 8 als ein stationäres Objekt wird zunächst ein Bewegungsverlauf 15 (siehe Fig. 2c) des Objektes 8', 8", also ein Bewegungsverlauf 15 der Projektion des erfassten Objektes 8, in den Bildkoordinaten a, b bestimmt. Dazu können beispielsweise eine Bildposition P' des Objektes 8' in dem ersten Bild 12 und eine Bildposition P"(a2, b2) des Objektes 8" in einem zu einem zweiten Zeitpunkt aufgenommenen zweiten Bild 14 bestimmt werden. Das zweite Bild 14 zeigt den Umgebungsbereich 4" als eine zweidimensionale Projektion des Umgebungsbereiches 4, die Fahrbahn 9" als eine zweidimensionale Projektion der Fahrbahn 9 und das Objekt 8" als ein zweidimensionale Projektion des Objekts 8 zu dem zweiten Zeitpunkt. Der zweite Zeitpunkt liegt dabei insbesondere zeitlich vor dem ersten, aktuellen Zeitpunkt. Die Änderung der Bildpositionen P', P" kann als eine den Bewegungsverlauf 15 kennzeichnende Trajektorie bestimmt werden und beispielsweise in dem ersten Bild 12 (siehe Fig. 2c) dargestellt werden.

Zusätzlich werden ausgehend von der ersten abgeschätzten Position P1 und der zweiten abgeschätzten Position P2 Bewegungsverläufe 16, 17, welche für ein stationäres Objekt charakteristisch sind, in Bildkoordinaten a, b bestimmt. Der erste charakterisierende Bewegungsverlauf 16 ist dabei charakteristisch für ein stationäres Objekt an der ersten, abgeschätzten Position P1 und der zweite charakterisierende Bewegungsverlauf 17 ist charakteristisch für ein stationäres Objekt an der zweiten, abgeschätzten Position P2. Die charakterisierenden Bewegungsverläufe 16, 17 werden bestimmt, indem beispielsweise die Bildpositionen eines stationären Referenzobjektes in den Bildern 12, 14 in Bildkoordinaten a, b bestimmt werden. Dazu werden für die Bildpositionen des stationären Referenzobjektes in dem ersten Bild 12 die erste Position P1 und die zweite Position P2 in Bildkoordinaten a, b umgerechnet. Zum Bestimmen der Bildpositionen des stationären Referenzobjektes in dem zweiten Bild 14 werden eine weitere, erste Position des stationären Referenzobjektes in Weltkoordinaten x, y, z und eine weitere, zweite Position des stationären Referenzobjektes in Weltkoordinaten x, y, z, welche das Referenzobjekt zum zweiten Zeitpunkt aufweist, in Bildkoordinaten a, b umgerechnet. Die weitere, erste und die weitere, zweite Position können beispielsweise anhand der Geschwindigkeit und/oder der Drehrate des Kraftfahrzeugs 1 bestimmt werden, welche anhand des Geschwindigkeitssensors 6 beziehungsweise anhand des Drehratensensors 7 erfasst wird. Außerdem werden die charakterisierenden Bewegungsverläufe 16, 17 unter der Annahme bestimmt, dass die Fahrbahn 9, auf welcher sich das Kraftfahrzeug 1 fortbewegt, eben ist und beispielsweise keine Schlaglöcher oder Bodenwellen aufweist. Die Bewegungsverläufe 16, 17, welche ebenfalls als Trajektorien in dem erste Bild 12 (siehe Fig. 2c) dargestellt werden können, bilden einen Korridor 18 aus. Das erfasste Objekt 8 wird dann als stationäres Objekt identifiziert, wenn sich der Bewegungsverlauf 15 des erfassten Objektes 8', 8" innerhalb des Korridors 18 befindet.

In Fig. 2c ist gezeigt, dass sich zwar die horizontalen Koordinaten a des Bewegungsverlaufes 15 innerhalb des Korridors 18 befinden, nicht aber die vertikalen Koordinaten b des Bewegungsverlaufes 15. Der Bewegungsverlauf 15 zeigt hier den Bewegungsverlauf des Objektes 8', 8" für das Kraftfahrzeug 1, während es sich auf einer Fahrbahn 9 bewegt, welche Bodenwellen aufweist. Durch diese Bodenwellen führt das Kraftfahrzeug 1 eine Nickbewegung um die Fahrzeugquerachse, also eine Nickbewegung entlang der z-Achse, durch. Aufgrund von dieser Nickbewegung bewegt sich das Objekt 8', 8" scheinbar in Höhenrichtung (b-Richtung) in den Bildkoordinaten a, b. Um trotz der Nickbewegung und ohne die Nickbewegung erfassen zu müssen, das erfasste Objekt 8 als stationäres Objekt identifizieren zu können, werden bei der Untersuchung, ob sich der Bewegungsverlauf 15 innerhalb des Korridors 18 befindet, nur die horizontalen Bildkoordinaten a betrachtet beziehungsweise berücksichtigt. Die vertikalen Bildkoordinaten b bleiben unberücksichtigt.

Anhand des Vergleichs des Bewegungsverlaufes 15 mit den charakterisierenden Bewegungsverläufen 16, 17 kann das erfasste Objekt 8 als stationäres Objekt identifiziert werden. Um das Objekt 8 als den Leitpfosten 13 zu identifizieren, kann zusätzlich untersucht werden, ob das Objekt 8 aktiv Licht in Richtung des Kraftfahrzeugs 1 reflektiert. Um aktiv Licht zu reflektieren, weist der Leitpfosten 13 Reflektoren 19 auf. Die Bildverarbeitungseinrichtung 5 kann beispielsweise anhand des ersten Bildes 12 erfassen, dass das Objekt 8', 8" Licht in Richtung des Kraftfahrzeug 1 aussendet. Schließlich kann die Bildverarbeitungseinrichtung 5 anhand der Bewegungsverläufe 15, 16, 17 das Objekt 8 als stationäres Objekt erfassen und somit das Objekt 8 korrekt als den Leitpfosten 13 identifizieren. Wenn das Objekt 8 als Leitpfosten 13 identifiziert wurde, kann von der Steuereinrichtung 10 verhindert werden, dass die Scheinwerfer 11 unnötigerweise zur Fernlichtregulierung angesteuert werden.

## Patentansprüche

1. Verfahren zum Identifizieren eines Objektes (8) in einem Umgebungsbereich (4) eines Kraftfahrzeugs (1) als ein stationäres Objekt, wobei bei dem Verfahren mittels einer fahrzeugseitigen Erfassungseinrichtung (3) der Umgebungsbereich (4) in Bildern (12, 14) erfasst wird und mittels einer Bildverarbeitungseinrichtung (5) in zumindest einem der erfassten Bilder (12, 14) das Objekt (8) erkannt wird, wobei anhand zumindest eines ersten erfassten Bildes (12) eine erste Position (P1) des Objektes (8) in dem Umgebungsbereich (4) relativ zum Kraftfahrzeug (1) abgeschätzt wird, wobei die erste Position (P1) einen ersten, möglichen Abstand des erfassten Objekts (8) zu dem Kraftfahrzeug (1) beschreibt, anhand des ersten Bildes (12) und zumindest eines zweiten erfassten Bildes (14) ein Bewegungsverlauf (15) des Objektes (8', 8") in Bildkoordinaten (a, b) bestimmt wird, ausgehend von der ersten abgeschätzten Position (P1) in dem Umgebungsbereich (4) ein erster, ein stationäres Objekt charakterisierender Bewegungsverlauf (16) in den Bildkoordinaten (a, b) bestimmt wird und anhand eines Vergleiches des Bewegungsverlaufes (15) des erfassten Objektes (8', 8") mit dem ersten charakterisierenden Bewegungsverlauf (16) das erfasste Objekt (8) als ein stationäres Objekt identifiziert wird,
**dadurch gekennzeichnet, dass**
anhand des zumindest einen ersten Bildes (12) zusätzlich eine zweite Position (P2) des Objektes (8) in dem Umgebungsbereich (4) relativ zu dem Kraftfahrzeug (1) abgeschätzt wird, wobei die zweite Position (P2) einen zweiten, möglichen Abstand des Objekts (8) zu dem Kraftfahrzeug (1) beschreibt, ausgehend von der zweiten abgeschätzten Position (P2) in dem Umgebungsbereich (4) ein zweiter, ein stationäres Objekt charakterisierender Bewegungsverlauf (17) in den Bildkoordinaten (a, b) bestimmt wird und das erfasste Objekt (8) anhand des Vergleiches des Bewegungsverlaufes (15) des erfassten Objektes (8', 8") mit dem ersten und dem zweiten charakterisierenden Bewegungsverlauf (17) identifiziert wird.

2. Verfahren nach Anspruch 1,
**dadurch gekennzeichnet, dass**
das erfasste Objekt (8) als ein stationäres Objekt identifiziert wird, wenn der Bewegungsverlauf (15) des erfassten Objektes (8', 8") innerhalb eines durch den ersten und den zweiten charakterisierenden Bewegungsverlauf (16, 17) gebildeten Korridors (18) liegt.

3. Verfahren nach Anspruch 1 oder 2,
**dadurch gekennzeichnet, dass**
für das erfasste Objekt (8) eine für das stationäre Objekt charakteristische erste Höhe (h1) vorgegeben wird und anhand des zumindest einen ersten Bildes (12) und anhand der für das Objekt (8) vorgegebenen ersten Höhe (h1) die erste Position (P1) in dem Umgebungsbereich (4) bestimmt wird, und für das erfasste Objekt (8) eine für das stationäre Objekt charakteristische zweite Höhe (h2) vorgegeben wird und anhand des zumindest einen ersten Bildes (12) und anhand der für das Objekt (8) vorgegebenen zweiten Höhe (h2) die zweite Position (P2) in dem Umgebungsbereich (4) bestimmt wird.

4. Verfahren nach einem der vorhergehenden Ansprüche,
**dadurch gekennzeichnet, dass**
zum Bestimmen eines charakterisierenden Bewegungsverlaufes (16, 17) eine Fahrzeuggeschwindigkeit und/oder eine Drehrate des Kraftfahrzeugs (1) um eine Fahrzeughochachse erfasst wird.

5. Verfahren nach einem der vorhergehenden Ansprüche,
**dadurch gekennzeichnet, dass**
ein charakterisierender Bewegungsverlauf (16, 17) unter der Annahme bestimmt wird, dass sich das Kraftfahrzeug (1) auf einer ebenen Fahrbahn (9) fortbewegt.

6. Verfahren nach einem der vorhergehenden Ansprüche,
**dadurch gekennzeichnet, dass**
beim Vergleich des Bewegungsverlaufes (15) des erfassten Objektes (8', 8") mit dem charakterisierenden Bewegungsverlauf (16, 17) nur Bildkoordinaten (a, b) einer vorbestimmten Richtung verglichen werden.

7. Verfahren nach Anspruch 6,
**dadurch gekennzeichnet, dass**
beim Vergleich des Bewegungsverlaufes (15) des erfassten Objektes (8', 8") mit einem charakterisierenden Bewegungsverlauf (16, 17) nur horizontale Bildkoordinaten (a) als die Bildkoordinaten (a, b) der vorbestimmten Richtung verglichen werden.

8. Verfahren nach einem der vorhergehenden Ansprüche,
**dadurch gekennzeichnet, dass**
die Position (P1, P2) des erfassten Objektes (8) anhand von einem zu einem aktuellen Zeitpunkt erfassten ersten Bild (12) abgeschätzt wird und der Bewegungsverlauf (15) des erfassten Objektes (8', 8") anhand von zumindest einem, zu einem zeitlich vor dem aktuellen Zeitpunkt erfassten zweiten Bild (14) bestimmt wird.

9. Verfahren nach einem der vorhergehenden Ansprüche,
**dadurch gekennzeichnet, dass**
das Objekt (8) als ein stationäres, Licht reflektierendes Objekt, insbesondere als ein Leitpfosten (13) und/oder als ein Straßenschild, als das stationäre Objekt identifiziert wird.

10. Verfahren nach Anspruch 9,
**dadurch gekennzeichnet, dass**
eine Regulierung eines von einem Scheinwerfer (11) des Kraftfahrzeugs (1) zum Ausleuchten einer Fahrbahn (9) des Kraftfahrzeugs (1) ausgesendeten Lichtes blockiert wird, derart, dass keine automatische Fernlichtregulierung erfolgt, wenn das Objekt (8) als das stationäre, Licht reflektierende Objekt identifiziert wurde.

11. Fahrerassistenzsystem (2) zum Identifizieren eines Objektes (8) in einem Umgebungsbereich (4) eines Kraftfahrzeugs (1) als ein stationäres Objekt, mit einer fahrzeugseitigen Erfassungseinrichtung (3) zum Erfassen des Umgebungsbereiches (4) in Bildern (12, 14) und mit einer Bildverarbeitungseinrichtung (15) zum Erkennen des Objektes (8) in zumindest einem der erfassten Bilder (12, 14),
wobei die Bildverarbeitungseinrichtung (5) dazu ausgelegt ist, anhand zumindest eines ersten Bildes (12) eine erste Position (P1) des Objektes (8) in dem Umgebungsbereich (4) relativ zu dem Kraftfahrzeug (1) abzuschätzen, wobei die erste Position (P1) einen ersten, möglichen Abstand des erfassten Objekts (8) zu dem Kraftfahrzeug (1) beschreibt, anhand des ersten Bildes (12) und zumindest eines zweiten erfassten Bildes (14) einen Bewegungsverlauf (15) des Objektes (8', 8") in Bildkoordinaten (a, b) zu bestimmen, ausgehend von der ersten abgeschätzten Position (P1) in dem Umgebungsbereich (4) einen ersten, ein stationäres Objekt charakterisierenden Bewegungsverlauf (16) in den Bildkoordinaten (a, b) zu bestimmen und anhand eines Vergleiches des Bewegungsverlaufes (15) des erfassten Objektes (8', 8") mit dem ersten charakterisierenden Bewegungsverlauf (16) das erfasste Objekt (8) als ein stationäres Objekt zu identifizieren,
**dadurch gekennzeichnet, dass**
die Bildverarbeitungseinrichtung (5) dazu ausgelegt ist, anhand zumindest eines ersten Bildes (12) eine zweite Position (P2) des Objektes (8) in dem Umgebungsbereich (4) relativ zu dem Kraftfahrzeug (1) abzuschätzen, wobei die zweite Position (P2) einen zweiten, möglichen Abstand des erfassten Objekts (8) zu dem Kraftfahrzeug (1) beschreibt, ausgehend von der zweiten abgeschätzten Position (P2) in dem Umgebungsbereich (4) einen zweiten, ein stationäres Objekt charakterisierenden Bewegungsverlauf (17) in den Bildkoordinaten (a, b) zu bestimmen und das erfasste Objekt (8) anhand des Vergleiches des Bewegungsverlaufes (15) des erfassten Objektes (8', 8") mit dem ersten und dem zweiten charakterisierenden Bewegungsverlauf (17) zu identifizieren.

12. Kraftfahrzeug (1) mit einem Fahrerassistenzsystem (2) nach Anspruch 11.

## Claims

1. Method for identifying an object (8) in a surrounding region (4) of a motor vehicle (1) as a stationary object, wherein in the method, the surrounding region (4) is captured in images (12, 14) using a vehicle-side capture device (3) and the object (8) is detected in at least one of the captured images (12, 14) using an image processing device (5),
wherein a first position (P1) of the object (8) in the surrounding region (4) relative to the motor vehicle (1) is estimated on the basis of at least one first captured image (12), wherein the first position (P1) describes a first, possible distance of the captured object (8) from the motor vehicle (1), a movement sequence (15) of the object (8', 8") in image coordinates (a, b) is determined on the basis of the first image (12) and at least one second captured image (14), a first movement sequence (16) that characterizes a first, stationary object in the image coordinates (a, b) is determined proceeding from the first estimated position (P1) in the surrounding region (4), and the captured object (8) is identified as a stationary object on the basis of a comparison of the movement sequence (15) of the captured object (8', 8") to the first characterizing movement sequence (16),
**characterized in that**
a second position (P2) of the object (8) in the surrounding region (4) relative to the motor vehicle (1) is estimated additionally on the basis of the at least one first image (12), wherein the second position (P2) describes a second, possible distance of the object (8) from the motor vehicle (1), and, proceeding from the second estimated position (P2) in the surrounding region (4), a second movement sequence (17) that characterizes a stationary object in the image coordinates (a, b) is determined, and the captured object (8) is identified on the basis of the comparison of the movement sequence (15) of the captured object (8', 8") to the first and the second characterizing movement sequence (17).

2. Method according to Claim 1,
**characterized in that**
the captured object (8) is identified as a stationary object if the movement sequence (15) of the captured object (8', 8'') is within a corridor (18) formed by the first and the second characterizing movement sequences (16, 17).

3. Method according to Claim 1 or 2,
**characterized in that**
a first height (h1) that is characteristic of the stationary object is specified for the captured object (8) and the first position (P1) in the surrounding region (4) is determined on the basis of the at least one first image (12) and on the basis of the first height (h1) specified for the object (8), and a second height (h2) that is characteristic of the stationary object is specified for the captured object (8) and the second position (P2) in the surrounding region (4) is determined on the basis of the at least one first image (12) and on the basis of the second height (h2) specified for the object (8).

4. Method according to one of the preceding claims,
**characterized in that**
a vehicle speed and/or an angular rate of the motor vehicle (1) about a vehicle height axis is captured to determine a characterizing movement sequence (16, 17).

5. Method according to one of the preceding claims,
**characterized in that**
a characterizing movement sequence (16, 17) is determined under the assumption that the motor vehicle (1) travels on an even road (9).

6. Method according to one of the preceding claims,
**characterized in that**
only image coordinates (a, b) of a predetermined direction are compared when comparing the movement sequence (15) of the captured object (8', 8") to the characterizing movement sequence (16, 17).

7. Method according to Claim 6,
**characterized in that**
only horizontal image coordinates (a) of the predetermined direction are compared as the image coordinates (a, b) when comparing the movement sequence (15) of the captured object (8', 8") to a characterizing movement sequence (16, 17).

8. Method according to one of the preceding claims,
**characterized in that**
the position (P1, P2) of the captured object (8) is estimated on the basis of a first image (12) captured at a current time point and the movement sequence (15) of the captured object (8', 8") is determined on the basis of at least one second image (14) captured at a time point that occurred before the current time point.

9. Method according to one of the preceding claims,
**characterized in that**
the object (8) as a stationary, light-reflecting object, in particular as a delineator post (13) and/or as a road sign, is identified as the stationary object.

10. Method according to Claim 9,
**characterized in that**
regulation of a light emitted by a headlight (11) of the motor vehicle (1) for illuminating a road (9) of the motor vehicle (1) is blocked in such a way that no automatic full-beam regulation is performed if the object (8) has been identified as the stationary, light-reflecting object.

11. Driver assistance system (2) for identifying an object (8) in a surrounding region (4) of a motor vehicle (1) as a stationary object, having a vehicle-side capture device (3) for capturing the surrounding region (4) in images (12, 14) and having an image processing device (15) for recognizing the object (8) in at least one of the captured images (12, 14),
wherein the image processing device (5) is configured to estimate a first position (P1) of the object (8) in the surrounding region (4) relative to the motor vehicle (1) on the basis of at least one first image (12), wherein the first position (P1) describes a first, possible distance of the captured object (8) from the motor vehicle (1), to determine a movement sequence (15) of the object (8', 8") in image coordinates (a, b) on the basis of the first image (12) and at least one second captured image (14), to determine a first movement sequence (16) that characterizes a stationary object in the image coordinates (a, b) proceeding from the first estimated position (P1) in the surrounding region (4), and to identify the captured object (8) as a stationary object on the basis of a comparison of the movement sequence (15) of the captured object (8', 8'') to the first characterizing movement sequence (16),
**characterized in that**
the image processing device (5) is configured to estimate a second position (P2) of the object (8) in the surrounding region (4) relative to the motor vehicle (1) on the basis of at least one first image (12), wherein the second position (P2) describes a second, possible distance of the captured object (8) from the motor vehicle (1), to determine a second movement sequence (17) that characterizes a stationary object in the image coordinates (a, b) proceeding from the second estimated position (P2) in the surrounding region (4), and to identify the captured object (8) on the basis of the comparison of the movement sequence (15) of the captured object (8', 8") to the first and the second characterizing movement sequence (17).

12. Motor vehicle (1) having a driver assistance system (2) according to Claim 11.

## Revendications

1. Procédé pour identifier un objet (8) dans une zone environnante (4) d'un véhicule automobile (1) comme un objet stationnaire, le procédé comprenant la capture de la zone environnante (4) dans des images (12, 14) au moyen d'un dispositif de capture (3) côté véhicule et la reconnaissance de l'objet (8) dans au moins l'une des images (12, 14) capturées au moyen d'un dispositif de traitement d'images (5), une première position (P1) de l'objet (8) dans la zone environnante (4) par rapport au véhicule automobile (1) étant estimée à l'aide d'au moins une première image (12) capturée, la première position (P1) décrivant un premier écart possible de l'objet (8) capturé par rapport au véhicule automobile (1), une trajectoire de mouvement (15) de l'objet (8', 8'') dans des coordonnées d'image (a, b) étant déterminée à l'aide de la première image (12) et d'au moins une deuxième image (14) capturée, une première trajectoire de mouvement (16) caractérisant un objet stationnaire étant déterminée dans les coordonnées d'image (a, b) à partir de la première position (P1) estimée dans la zone environnante (4) et l'objet (8) capturé étant identifié comme un objet stationnaire à l'aide d'une comparaison de la trajectoire de mouvement (15) de l'objet (8', 8'') capturé avec la première trajectoire de mouvement (16) caractérisante,
**caractérisé en ce que**
une deuxième position (P2) de l'objet (8) dans la zone environnante (4) par rapport au véhicule automobile (1) étant en plus estimée à l'aide de l'au moins une première image (12) capturée, la deuxième position (P2) décrivant un deuxième écart possible de l'objet (8) par rapport au véhicule automobile (1), une deuxième trajectoire de mouvement (17) caractérisant un objet stationnaire étant déterminée dans les coordonnées d'image (a, b) à partir de la deuxième position (P2) estimée dans la zone environnante (4) et l'objet (8) capturé étant identifié à l'aide de la comparaison de la trajectoire de mouvement (15) de l'objet (8', 8'') capturé avec la première et la deuxième trajectoire de mouvement (17) caractérisantes.

2. Procédé selon la revendication 1, **caractérisé en ce que** l'objet (8) capturé est identifié comme un objet stationnaire lorsque la trajectoire de mouvement (15) de l'objet (8', 8'') capturé se trouve à l'intérieur d'un corridor (18) formé par la première et la deuxième trajectoire de mouvement (16, 17) caractérisantes.

3. Procédé selon la revendication 1 ou 2, **caractérisé en ce qu'**une première hauteur (h1) caractéristique pour l'objet stationnaire est prédéfinie pour l'objet (8) capturé et la première position (P1) dans la zone environnante (4) est déterminée à l'aide de l'au moins une première image (12) et à l'aide de la première hauteur (h1) prédéfinie pour l'objet (8), et une deuxième hauteur (h2) caractéristique pour l'objet stationnaire est prédéfinie pour l'objet (8) capturé et la deuxième position (P2) dans la zone environnante (4) est déterminée à l'aide de l'au moins une première image (12) et à l'aide de la deuxième hauteur (h2) prédéfinie pour l'objet (8).

4. Procédé selon l'une des revendications précédentes, **caractérisé en ce qu'**une vitesse de véhicule et/ou une vitesse de rotation du véhicule automobile (1) autour d'un axe de hauteur du véhicule est détecté en vue de déterminer une trajectoire de mouvement (16, 17) caractérisante.

5. Procédé selon l'une des revendications précédentes, **caractérisé en ce qu'**une trajectoire de mouvement (16, 17) caractérisante est déterminée en prenant pour hypothèse que le véhicule automobile (1) se déplace sur une voie de circulation plane (9).

6. Procédé selon l'une des revendications précédentes, **caractérisé en ce que** lors de la comparaison de la trajectoire de mouvement (15) de l'objet (8', 8'') capturé avec la trajectoire de mouvement (16, 17) caractérisante, seules sont comparées les coordonnées d'image (a, b) d'une direction prédéfinie.

7. Procédé selon la revendication 6, **caractérisé en ce que** lors de la comparaison de la trajectoire de mouvement (15) de l'objet (8', 8'') capturé avec la trajectoire de mouvement (16, 17) caractérisante, seules sont comparées les coordonnées d'image (a) en tant que coordonnées d'image (a, b) de la direction prédéfinie.

8. Procédé selon l'une des revendications précédentes, **caractérisé en ce que** la position (P1, P2) de l'objet (8) capturé est estimée à l'aide d'une première image (12) capturée à un instant actuel et la trajectoire de mouvement (15) de l'objet (8', 8'') capturé est déterminée à l'aide d'au moins une deuxième image (14) capturée chronologiquement avant l'instant actuel.

9. Procédé selon l'une des revendications précédentes, **caractérisé en ce que** l'objet (8) est identifié comme un objet stationnaire réfléchissant la lumière, notamment comme un délinéateur (13) et/ou un panneau de signalisation, en tant que l'objet stationnaire.

10. Procédé selon la revendication 9, **caractérisé en ce qu'**une régulation d'une lumière émise par un phare (11) du véhicule automobile (1) pour éclairer une voie de circulation (9) du véhicule automobile (1) est bloquée de telle sorte qu'aucune régulation automatique des feux de route n'a lieu que lorsque l'objet (8) a été identifié comme l'objet stationnaire réfléchissant la lumière.

11. Système d'assistance au conducteur (2) pour identifier un objet (8) dans une zone environnante (4) d'un véhicule automobile (1) comme un objet stationnaire, comprenant un dispositif de capture (3) côté véhicule destiné à capturer la zone environnante (4) dans des images (12, 14) et comprenant un dispositif de traitement d'images (15) destiné à reconnaître l'objet (8) dans au moins l'une des images (12, 14) capturées, le dispositif de traitement d'images (5) étant conçu pour estimer une première position (P1) de l'objet (8) dans la zone environnante (4) par rapport au véhicule automobile (1) à l'aide d'au moins une première image (12), la première position (P1) décrivant un premier écart possible de l'objet (8) capturé par rapport au véhicule automobile (1), pour déterminer une trajectoire de mouvement (15) de l'objet (8', 8'') dans des coordonnées d'image (a, b) à l'aide de la première image (12) et d'au moins une deuxième image (14) capturée, pour déterminer une première trajectoire de mouvement (16) caractérisant un objet stationnaire dans les coordonnées d'image (a, b) à partir de la première position (P1) estimée dans la zone environnante (4) et pour identifier l'objet (8) capturé comme un objet stationnaire à l'aide d'une comparaison de la trajectoire de mouvement (15) de l'objet (8', 8'') capturé avec la première trajectoire de mouvement (16) caractérisante,
**caractérisé en ce que**
le dispositif de traitement d'images (5) est conçu pour estimer une deuxième position (P2) de l'objet (8) dans la zone environnante (4) par rapport au véhicule automobile (1) à l'aide d'au moins une première image (12), la deuxième position (P2) décrivant un deuxième écart possible de l'objet (8) par rapport au véhicule automobile (1), pour déterminer une deuxième trajectoire de mouvement (17) caractérisant un objet stationnaire dans les coordonnées d'image (a, b) à partir de la deuxième position (P2) estimée dans la zone environnante (4) et pour identifier l'objet (8) capturé à l'aide de la comparaison de la trajectoire de mouvement (15) de l'objet (8', 8'') capturé avec la première et la deuxième trajectoire de mouvement (17) caractérisantes.

12. Véhicule automobile (1) comprenant un système d'assistance au conducteur (2) selon la revendication 11.
